# EUROPÄISCHE PATENTSCHRIFT

(11) **EP 1 244 084 B1**
(45) Veröffentlichungstag und Bekanntmachung des Hinweises auf die Patenterteilung: **25.07.2012**
(21) Anmeldenummer: 02005448.2
(22) Anmeldetag: 08.03.2002
(51) Int. Cl.: F24H 9/20

(54) **Verfahren und Vorrichtung zum Verändern des Werts einer Einstellung eines Heisswasserbereiters**
Process and apparatus for modifying the value of the setting of a hot water supply
Procédé et dispositif pour modifier la valeur des paramètres d'une installation pour fournir de l'eau chaude

(30) Priorität: 23.03.2001 DE 10114196
(43) Veröffentlichungstag der Anmeldung: 25.09.2002
(73) Patentinhaber: BSH Bosch und Siemens Hausgeräte GmbH, 81739 München (DE)
(72) Erfinder: Helminger, Markus, Dipl.-Ing.(TU), 83313 Siegsdorf (DE)

(56) Entgegenhaltungen:
- JP-A- 9 145 154
- JP-A- 11 063 649

## Beschreibung

Die vorliegende Erfindung betrifft ein Verfahren zum Verändern des Werts einer Einstellung eines Heißwasserbereiters nach dem Oberbegriff des Patentanspruchs 1 bzw. einen Heißwasserbereiter zur Durchführung des Verfahrens.

Es ist bekannt, Heißwasserbereitern insbesondere für den Einsatz in einem Haushalt Fernbedienungen zuzuordnen, um den Wert einer Einstellung des Heißwasserbereiters auch von einem anderen Ort aus verändern zu können. Dies ist beispielsweise in den Fällen vorteilhaft, in denen der Heißwasserbereiter an einem abgelegenen Ort des Haushalts angeordnet ist und Einstellhandlungen aus der Entfernung und insbesondere von den Zapfstellen aus möglich sein sollen, so dass sich der Komfort für einen Benutzer erhöht. Beispiele für Einstellungen sind beispielsweise die Solltemperatur für das Heißwasser, Grenzwerte für die Wassertemperatur oder den Verbrauch, die Einstellungen einer Zeitschaltuhr oder auch das Ein- und Ausschalten des Heißwasserbereiters.

Beispielsweise ist durch die US 5,446,453 ein Heißwasserbereiter mit mehreren zugeordneten Fernbedienungen bekannt, bei dem eine an einer Fernbedienung eingestellte Solltemperatur per Funk an den Heißwasserbereiter übertragen wird. Durch die verschiedenen Möglichkeiten zur Einstellung der Solltemperatur besteht dabei nachteiligerweise die Gefahr, dass die Solltemperatur von einem Benutzer verändert wird, während ein anderer Benutzer dem Heißwasserbereiter heißes Wasser entnimmt. Dadurch kann es unter Umständen zu Verbrühungen kommen, wenn ein Benutzer im Bad zunächst eine bestimmte Temperatur einstellt und später ein weiterer Benutzer beispielsweise in der Küche die Solltemperatur erhöht.

In der JP-A-11063649 ist ein Heißwasserbereiter nach dem Stand der Technik offenbart.

Der vorliegenden Erfindung liegt die Aufgabe zugrunde, ein Verfahren zum Verändern einer Einstellung eines Heißwasserbereiters sowie einen Heißwasserbereiter der eingangs genannten Art mit einer erhöhter Betriebssicherheit zu schaffen.

Erfindungsgemäß wird diese Aufgabe durch ein Verfahren mit den Merkmalen des Patentanspruchs 1 bzw. durch einen Heißwasserbereiter mit den Merkmalen des Patentanspruchs 10 gelöst.

Durch die Berücksichtigung der Quelle des Einstellsignals bzw. der benutzten Einstellvorrichtung ist es möglich, den verschiedenen Einstellvorrichtungen unterschiedliche Wertigkeiten bzw. Prioritäten zu verleihen. So kann vorgesehen werden, dass insbesondere die Einstellvorrichtung, die von einem ersten Benutzer genutzt wird, der den Heißwasserbereiter gerade in Gebrauch hat, eine höhere Priorität aufweist. Dabei kann beispielsweise vorgesehen werden, dass nur von einer bestimmten Einstellvorrichtung aus eine Veränderung des Werts einer Einstellung vorgenommen werden kann. So kann vermieden werden, dass ein zweiter Benutzer, dem notwendigerweise nur noch Einstellvorrichtungen mit niedrigeren Prioritäten zur Verfügung stehen, eine andere, für den ersten Benutzer nachteilige Einstellung am Heißwasserbereiter vornimmt.

Weiterhin ist es möglich, dass in Abhängigkeit der benutzten Einstellvorrichtung unterschiedliche Randbedingungen für die Veränderung des Werts einer Einstellung berücksichtigt werden. Beispielsweise können für bestimmte Einstellvorrichtungen Grenzwerte für den Bereich vorgegeben werden, in dem der Wert einer Einstellung verändert werden kann, oder es können von der Zeit abhängige Randbedingungen vorgebbar sein, beispielsweise nur eine bestimmte Zunahme oder Abnahme je Zeiteinheit zulässig sein. So kann vorgesehen sein, dass mit einer Fernbedienung zur Benutzung durch Kinder oder ältere Menschen die Temperatur nicht über einen bestimmten Grenzwert eingestellt werden kann, um Unfälle durch Fehlbedienung zu vermeiden. Eine Fernbedienung zur Benutzung durch Erwachsene kann dagegen so eingerichtet sein, dass mit ihr auch höhere Temperaturen einstellbar sind.

Beispielsweise kann eine Einstellvorrichtung bei einer Fernbedienung und eine weitere bei dem Heißwasserbereiter vorgesehen sein wobei der Fernbedienung die höhere Priorität zugeteilt sein kann. Auf diese Weise kann ein Benutzer, der den Heißwasserbereiter in Gebrauch nehmen möchte, immer die Einstellvorrichtung mit der höchsten Priorität, d.h. die Fernbedienung, zu sich nehmen und so verhindern, dass andere Benutzer für ihn nachteilige Einstellungen am Heißwasserbereiter vornehmen. Wenn mehrere Fernbedienungen vorhanden sind, kann eine davon mit der höchsten nungen vorhanden sind, kann eine davon mit der höchsten Priorität versehen werden, wobei die Prioritäten der einzelnen Fernbedienungen auch einstellbar sein können.

Vorteilhafterweise wird bei der Veränderung des Werts einer Einstellung auch berücksichtigt, wie viel Zeit seit dem letzten Zapfvorgang vergangen ist, d.h. wie lange schon dem Heißwasserbereiter kein heißes Wasser entnommen worden ist. Damit kann gleichzeitig eine geringe Einschränkung der Einstellmöglichkeiten von einer Einstellvorrichtung mit einer geringerer Priorität aus und eine hohe Betriebssicherheit erreicht werden. Dazu kann vorgesehen sein, dass mittels einer Einstellvorrichtung der Wert einer Einstellung immer und mittels den übrigen Einstellvorrichtungen der Wert einer Einstellung erst eine gewisse Zeit nach dem letzten Zapfvorgang geändert werden.

In diesem Fall kann der Benutzer, der den Heißwasserbereiter gerade benutzt, die Einstellvorrichtung zu sich nehmen, mit der der Wert einer Einstellung immer geändert werden kann, beispielsweise um im Bad heißes Wasser zu zapfen. In dieser Zeit kann kein anderer Benutzer beispielsweise die Temperatur verändern, so dass kein Sicherheitsrisiko besteht. Sobald jedoch dieser Benutzer kein heißes Wasser mehr benötigt, kann nach Ablauf einer bestimmten Zeitdauer auch ein anderer Benutzer von einer anderen Einstellvorrichtung aus die Temperatur verändert werden, ohne dass eine Übergabe der Einstellvorrichtung mit der höheren Priorität erforderlich wäre.

Die Art der Abhängigkeit, gemäß der abhängig von der benutzten Einstellvorrichtung bzw. der seit dem letzten Zapfvorgang vergangenen Zeit der Wert einer Einstellung veränderbar ist, wird im folgenden als Verfahren zur Vorrangbehandlung bezeichnet. Dieses Verfahren ist in dem Heißwasserbereiter implementiert, wobei vorgesehen sein kann, dass das Verfahren einstellbar bzw. veränderbar ist. Dazu kann der Heißwasserbereiter so eingerichtet sein, dass die Eigenschaften dieses Verfahrens programmierbar sind. Vorteilhafterweise sind in dem Heißwasserbereiter mehrere vordefinierte Verfahren zur Vorrangbehandlung gespeichert, von denen eines ausgewählt bzw. eingestellt werden kann. Dies kann von einer Eingabevorrichtung des Heißwasserbereiters oder von einer Fernbedienung aus geschehen.

Weiterhin kann der Heißwasserbereiter auch mit einer Schnittstelle zu einem Datenverarbeitungsgerät wie beispielsweise einem Personal-Computer oder einem Service-Computer versehen sein, mittels dem das Verfahren programmiert oder ausgewählt werden kann. Eine weitere Möglichkeit zur Einstellung oder Programmierung des Verfahrens besteht über den Anschluss des Heißwasserbereiters an ein haushaltinternes Datenübertragungsnetzwerk zur Steuerung von Haushaltgeräten.

Vorteilhafterweise ist die Veränderung des gerade aktiven Verfahrens zur Vorrangbehandlung gegen unbeabsichtigtes Verändern oder Mißbrauch geschützt. Dazu kann beispielsweise vorgesehen sein, dass das Verfahren zur Vorrangbehandlung nur von einer Einstellvorrichtung aus und insbesondere nur von der Einstellvorrichtung des Heißwasserbereiters aus verändert werden kann. Zusätzlich kann als Sicherung vorgesehen sein werden, dass zu einer Änderung des Verfahrens zur Vorrangbehandlung vorher eine bestimmte Tastenkombination eingegeben werden muss. Eine weitere Möglichkeit zur Sicherung besteht darin, dass zur Änderung des Verfahrens ein Benutzer sich vorher mittels eines Gegenstands identifizieren muss, beispielsweise durch einen Schlüssel, eine Chipkarte oder eine Karte mit einem codierten Magnetstreifen.

In einer weiteren Ausgestaltung kann vorgesehen sein, dass zum Verändern des Werts einer Einstellung von der Einstellvorrichtung der Fernbedienung ein erzeugtes Einstellsignal an eine Steuereinrichtung des Heißwasserbereiters gesendet wird, die Steuereinrichtung des Heißwasserbereiters in Abhängigkeit des Einstellsignals einen neuen Wert für die Einstellung ermittelt, den ermittelten neuen Wert der Einstellung an die Fernbedienung zurücksendet und die Fernbedienung den empfangenen neuen Wert der Einstellung anzeigt. Damit wird die Sicherheit erhöht, mit der die Fernbedienung den richtigen, d.h. den dem Betrieb des Heißwasserbereiters tatsächlich zugrundeliegenden, Wert anzeigt. Ist beispielsweise der Datenübertragungsweg gestört, wird von der Fernbedienung kein Wert für die Einstellung empfangen und kann somit keinen falschen Wert anzeigen.

Dabei kann vorgesehen sein, dass auch in der Fernbedienung in Abhängigkeit des mittels der Einstellvorrichtung der Fernbedienung erzeugten Einstellsignals ein neuer Wert für die Einstellung ermittelt und solange anzeigt wird, bis die Fernbedienung einen neuen Wert dieser Einstellung von der Steuereinrichtung des Heißwasserbereiters empfangen hat.

Zusätzlich kann vorgesehen sein, dass die Fernbedienung für eine Einstellung, für die sie seit dem Senden des entsprechenden Einstellsignals für eine bestimmte Zeitdauer keinen Wert von der Steuereinrichtung des Heißwasserbereiters empfangen hat, keinen Wert anzeigt oder eine Fehlermeldung abgibt.

Dabei kann auch vorgesehen sein, dass die Steuereinrichtung des Heißwasserbereiters auch ohne den Empfang von Einstellsignalen in zeitlichen Abständen den aktuellen Wert einer Einstellung an die Fernbedienung sendet, wobei zusätzlich vorgesehen sein kann, dass die Fernbedienung für eine Einstellung, für die sie für eine bestimmte Zeitdauer keinen Wert von der Steuereinrichtung des Heißwasserbereiters empfangen hat, keinen Wert anzeigt oder eine Fehlermeldung abgibt.

Ein Ausführungsbeispiel der Erfindung ist in den Zeichnungen rein schematisch dargestellt und wird nachfolgend näher beschrieben. Es zeigen
- Fig. 1: einen Heißwasserbereiter mit zugeordneter Fernbedienung zur Durchführung des erfindungsgemäßen Verfahrens und
- Fig. 2: Blockschaltbilder des Heißwasserbereiters und der Fernbedienung.

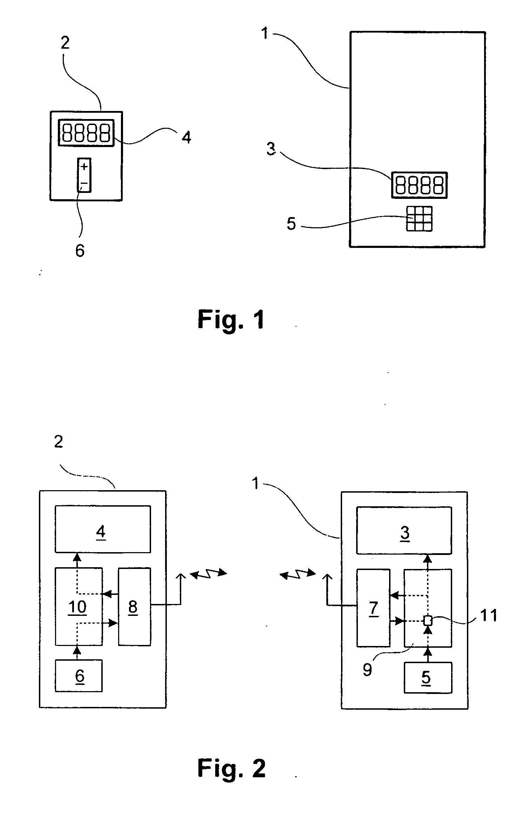

In Fig. 1 ist als Heißwasserbereiter ein elektrischer Durchlauferhitzer 1 dargestellt, der von außen zugänglich eine Anzeige 3 und ein Tastenfeld 5 als Eingabevorrichtung aufweist. Innen und nicht dargestellt weist der Durchlauferhitzer 1 eine Steuereinrichtung 9 auf, die den Betrieb des Durchlauferhitzers 1 entsprechend von internen Einstellungen steuert.

Zusätzlich zeigt Fig. 1 eine dem Durchlauferhitzer 1 zugeordnete Fernbedienung 2, die ebenfalls eine Anzeige 4, eine Eingabevorrichtung in Gestalt eines Wipptasters 6 mit zwei Einschaltfunktionen und innen nicht dargestellt eine Steuereinrichtung 10 aufweist, wobei der Wipptaster 6 auch durch zwei separate Eintaster ersetzt werden kann. Den Steuereinrichtungen 9, 10 des Durchlauferhitzers 1 bzw. der Fernbedienung 2 sind jeweils Datenübertragungseinrichtungen 7, 8 zugeordnet, mit denen die Steuereinrichtungen 9, 10 Daten austauschen können.

Eine Einstellung ist die Solltemperatur des Wassers, deren Wert sowohl von der Fernbedienung 2 aus als auch direkt am Durchlauferhitzer 1 eingestellt werden kann. Weiterhin ist ein Verfahren zur Vorrangbehandlung vorgesehen, das die Einstellung des Werts für die Solltemperatur anhängig davon regelt, ob die Handlung zum Einstellen der Solltemperatur an der Fernbedienung 2 oder am Durchlauferhitzer 1 vorgenommen worden ist, wobei auch die Zeit seit dem letzten Zapfvorgang berücksichtigt werden kann. Dazu weist die Steuereinrichtung des Durchlauferhitzers 1 eine zur Messung dieser Zeitdauer eingerichtete Zeitmesseinrichtung auf. Für das Verfahren zur Vorrangbehandlung sind die folgenden Regeln in der Steuereinrichtung des Durchlauferhitzers 1 hinterlegt und können von einem Benutzer am Heißwasserbereiter 1 ausgewählt werden.
- Solltemperatur ist nur an der Fernbedienung 2 einstellbar
- Solltemperatur ist an der Fernbedienung 2 immer und am Durchlauferhitzer 1 erst 3 min. nach dem letzten Zapfvorgang einstellbar
- Solltemperatur ist am Durchlauferhitzer 1 immer und an der Fernbedienung 2 erst 3 min. nach dem letzten Zapfvorgang einstellbar
- Solltemperatur ist an der Fernbedienung 2 und am Durchlauferhitzer 1 einstellbar

Der Wert für die Solltemperatur und das Verfahren zur Vorrangbehandlung können an dem Tastenfeld 5 des Durchlauferhitzers 1 direkt eingegeben werden. Dazu sind den verschiedenen einstellbaren Regeln für die Vorrangbehandlung jeweils eine Sondertaste des Tastenfelds 5 zugeordnet, wobei zur Änderung des Verfahrens zur Vorrangbehandlung zuvor eine bestimmte Tastenkombination eingegeben werden muss, um eine unbeabsichtigte oder mißbräuchliche Änderung des Verfahrens zu verhindern. Der Wert für die Solltemperatur wird über Zifferntasten des Tastenfelds 5 eingegeben.

Zur Einstellung der Solltemperatur mittels der Fernbedienung 2 ist der Wipptaster 6 vorgesehen. Dazu sind den beiden Einschaltfunktionen des Wipptasters 6 die beiden Symbole + bzw. - zugeordnet. Ein Betätigen der mit + bezeichneten Einschaltfunktion bewirkt, dass die Solltemperatur erhöht wird. Entsprechend bewirkt das Betätigen der mit - bezeichneten Einschaltfunktion eine Erniedrigung der Solltemperatur.

In Fig. 2 sind Blockschaltbilder des Durchlauferhitzers 1 und der Fernbedienung 2 sowie die Signalwege bei Einstellhandlungen dargestellt. Wird an dem Wipptaster 6 der Fernbedienung 2 die Solltemperatur eingestellt, wird das erzeugte Einstellsignal von der Steuereinrichtung 10 der Fernbedienung 2 zur Datenübertragungseinrichtung 8 geleitet, die dieses Einstellsignal per Funk an eine Datenübertragungseinrichtung 7 des Durchlauferhitzers 1 sendet, worauf das Einstellsignal an die Steuereinrichtung 9 des Durchlauferhitzers 1 geleitet wird. Dort wird das Einstellsignal einer das Verfahren zur Vorrangbehandlung ausführenden Vorrangschaltung 11 zugeführt, in der entsprechend der eingestellten Vorrangbehandlung der Wert für die Solltemperatur geändert, dem weiteren Betrieb des Durchlauferhitzers 1 zugrunde gelegt und mittels der Anzeige 3 angezeigt wird.

Zusätzlich wird die geänderte Solltemperatur bzw. Regel der Vorrangbehandlung von der Steuereinrichtung 9 an die Datenübertragungseinrichtung 7 geleitet und von dieser an die Datenübertragungseinrichtung 8 der Fernbedienung 2 per Funk übertragen. Dort wird die übertragene Angabe an die Steuereinrichtung 10 der Fernbedienung 2 geleitet und von dieser mittels der Anzeige 4 angezeigt.

Wird die Einstellhandlung an dem Tastenfeld 5 des Durchlauferhitzers 1 vorgenommen, werden die entsprechenden Einstellsignale direkt zu der Steuereinrichtung 9 des Durchlauferhitzers 1 geleitet und dort wiederum der Vorrangschaltung 11 zugeführt. Anschließend wird wie im vorigen Fall der Wert der Solltemperatur entsprechend der eingestellten Regel geändert, dem weiteren Betrieb zugrunde gelegt, mittels der Anzeige 3 angezeigt und zur Fernbedienung 2 gesendet, damit auch dort der neue Wert für die Solltemperatur angezeigt werden kann.

In einer Weiterbildung kann vorgesehen sein, dass die Steuereinrichtung 10 der Fernbedienung 2 anhand des von dem Wipptaster 6 erzeugten Einstellsignals selbst den neuen Wert für die Solltemperatur ermittelt und anzeigt. Sobald jedoch die Fernbedienung 2 von der Steuereinrichtung 9 des Durchlauferhitzers 1 den dort ermittelten Wert für die Solltemperatur empfängt, wird dieser von der Anzeige 4 der Fernbedienung 2 angezeigt. Wenn aufgrund eines Fehlers oder einer zu geringen Funkreichweite kein Wert von der Steuereinrichtung 9 des Durchlauferhitzers 1 innerhalb einer bestimmten Zeit nach dem Senden des Einstellsignals von der Steuereinrichtung 10 der Fernbedienung 2 empfangen wird, werden auf der Anzeige 4 als Fehlermeldung vier Striche zum Zeichen eines Fehlers bei der Einstellung der Solltemperatur angezeigt.

## Patentansprüche

1. Verfahren zum Verändern des Werts einer Einstellung eines Heißwasserbereiters (1) in Abhängigkeit eines Einstellsignals, das von wenigstens zwei Einstellvorrichtungen (5, 6) aus erzeugbar ist, wobei der Wert einer Einstellung des Heißwasserbereiters bei einer Betätigung einer der Einstellvorrichtungen in Abhängigkeit von einer Berechtigung der betätigten Einstellvorrichtung zur Veränderung dieser Einstellung geändert wird,
wobei eine Einstellvorrichtung eine Eingabevorrichtung (5) des Heißwasserbereiters (1) ist und wenigstens eine weitere Einstellvorrichtung eine Eingabevorrichtung (6) einer Fernbedienung (2) ist,
**dadurch gekennzeichnet, dass** in Abhängigkeit der benutzten Einstellvorrichtung unterschiedliche Randbedingungen für die Veränderung des Werts der Einstellung berücksichtigt werden
dergestalt, dass für bestimmte Einstellvorrichtungen Grenzwerte für den Bereich vorgegeben werden, in dem der Wert einer Einstellung verändert werden kann.

2. Verfahren nach Anspruch 1, **dadurch gekennzeichnet, dass** der Wert der Einstellung weiterhin in Abhängigkeit davon geändert wird, wie viel Zeit seit dem letzten Zapfvorgang vergangen ist.

3. Verfahren nach Anspruch 1 bis 2, **dadurch gekennzeichnet, dass** eine Veränderung des Werts einer Einstellung nicht zugelassen wird, wenn das Einstellsignal von einer bestimmten Einstellvorrichtung (5, 6) aus erzeugt wurde.

4. Verfahren nach einem der Ansprüche 1 bis 2, **dadurch gekennzeichnet, dass** eine Veränderung des Wert einer Einstellung in Abhängigkeit eines von einer bestimmten Einstellvorrichtung (5, 6) aus erzeugten Einstellsignals während einer bestimmten Zeitdauer nach dem letzten Zapfvorgang nicht zugelassen wird.

5. Verfahren nach einem der Ansprüche 1 bis 4, **dadurch gekennzeichnet, dass** die Art der Abhängigkeit, mit der ein Wert der Einstellung abhängig davon geändert wird, von welcher Einstellvorrichtung (5, 6) aus das Einstellsignal erzeugt wurde bzw. wie viel Zeit seit dem letzten Zapfvorgang vergangenen ist, als ein Verfahren zur Vorrangbehandlung einstellbar ist.

6. Verfahren nach Anspruch 5, **dadurch gekennzeichnet, dass** mehrere vordefinierte Verfahren zur Vorrangbehandlung gespeichert sind, von denen eines eingestellt werden kann.

7. Verfahren nach Anspruch 5 oder 6 , **dadurch gekennzeichnet, dass** das Vorrangbehandlungsverfahren nur an dem Heißwasserbereiter (1) einstellbar ist.

8. Verfahren nach einem der Ansprüche 1 bis 7, **dadurch gekennzeichnet, dass** die Einstellung die Sollwassertemperatur ist.

9. Heißwasserbereiter (1), eingerichtet zur Durchführung des Verfahrens nach einem der Ansprüche 1 bis 8.

## Claims

1. Method of changing the value of a setting of a water heater (1) in dependence on a setting signal which can be generated by at least two setting devices (5, 6), wherein the value of a setting of the water heater on actuation of one of the setting devices is changed in dependence on an authorisation of the actuated setting device for change of this setting, and wherein one setting device is an input device (5) of the water heater (1) and at least one further setting device is an input device (6) of a remote control (2), **characterised in that** different boundary conditions for change in the value of the setting are so taken into consideration in dependence on the setting device used that limit values for the range in which the value of a setting can be changed are predetermined for specific setting devices.

2. Method according to claim 1, **characterised in that** the value of the setting is further changed in dependence on how much time since the last tapping has passed.

3. Method according to claim 1 or 2, **characterised in that** a change in the value of a setting is not permitted if the setting signal was generated by a specific setting device (5, 6).

4. Method according to one of claims 1 and 2, **characterised in that** a change in the value of a setting in dependence on a setting signal generated by a specific setting device (5, 6) is not permitted during a specific time period after the last tapping.

5. Method according to any one of claims 1 to 4, **characterised in that** the form of dependence - by which a value of the setting is changed in dependence thereon - on the setting device (5, 6) from which the setting signal was generated or on how much time has passed since the last tapping is settable as a procedure for priority handling.

6. Method according to claim 5, **characterised in that** a plurality of predefined procedures for priority handling, of which one can be set, is stored.

7. Method according to claim 5 or 6, **characterised in that** the priority handling procedure is settable only at the water heater (1).

8. Method according to any one of claims 1 to 7, **characterised in that** the setting is the target water temperature.

9. Water heater (1) equipped for performance of the method according any one of claims 1 to 8.

## Revendications

1. Procédé pour modifier la valeur d'un réglage d'un chauffe-eau (1) en fonction d'un signal de réglage qui peut être généré à partir d'au moins deux dispositifs de réglage (5, 6), la valeur d'un réglage du chauffe-eau, lors d'une commande de l'un des dispositifs de réglage, étant modifiée en fonction d'une autorisation du dispositif de réglage commandé pour modifier ce réglage, un dispositif de réglage étant un dispositif d'entrée (5) du chauffe-eau (1) et au moins un dispositif de réglage supplémentaire étant un dispositif d'entrée d'une télécommande (2),
**caractérisé en ce qu'**en fonction du dispositif de réglage utilisé, différentes conditions aux limites sont prises en compte pour la modification de la valeur du réglage
de manière à ce que pour des dispositifs de réglage déterminés, des valeurs limites sont prédéfinies pour la plage dans laquelle la valeur d'un réglage peut être modifiée.

2. Procédé selon la revendication 1, **caractérisé en ce que** la valeur du réglage est en outre modifiée en fonction de la quantité de temps écoulé depuis la dernière opération de prélèvement.

3. Procédé selon les revendications 1 à 2, **caractérisé en ce qu'**une modification de la valeur d'un réglage n'est pas permise lorsque le signal de réglage a été généré à partir d'un dispositif de réglage déterminé (5, 6).

4. Procédé selon l'une quelconque des revendications 1 à 2, **caractérisé en ce qu'**une modification de la valeur d'un réglage en fonction d'un signal de réglage généré à partir d'un dispositif de réglage déterminé (5, 6) n'est pas permise pendant une période de temps déterminée après la dernière opération de prélèvement.

5. Procédé selon l'une quelconque des revendications 1 à 4, **caractérisé en ce que** le mode de dépendance, avec lequel une valeur du réglage est modifiée en fonction du fait de savoir par lequel dispositif de réglage (5, 6) le signal de réglage a été généré resp. combien de temps il s'est écoulé depuis la dernière opération de prélèvement, est réglable en tant qu'un procédé pour le traitement par priorité.

6. Procédé selon la revendication 5, **caractérisé en ce que** plusieurs procédés prédéfinis pour le traitement par priorité sont mémorisés, dont un peut être réglé.

7. Procédé selon la revendication 5 ou 6, **caractérisé en ce que** le procédé de traitement par priorité est réglable seulement sur le chauffe-eau (1).

8. Procédé selon l'une quelconque des revendications 1 à 7, **caractérisé en ce que** le réglage est la température théorique de l'eau.

9. Chauffe-eau (1) agencé pour la réalisation du procédé selon l'une quelconque des revendications 1 à 8.
